# EUROPEAN PATENT APPLICATION

(11) **EP 1 122 105 A2**
(43) Date of publication of application: **08.08.2001**
(21) Application number: 01102024.5
(22) Date of filing: 30.01.2001
(51) Int. Cl.: B60H 3/00

(54) **System for purifying the ventilation air in the passenger compartment of motor vehicles or the like and of flows of air containing dust, exhaust fumes or the like, by atomization filtration**

(30) Priority: 02.02.2000 IT VR000007; 11.10.2000 IT VR000102
(71) Applicant: CA.MA. Technologies s.r.l., 37010 Castelnuovo del Garda, Verona (IT)
(72) Inventor: Manara, Giampaolo, Sona (Verona) (IT)
(74) Representative: Savi, Alberto

(57) **Abstract**

The system in question can be considered like a system for "washing" the ventilation air in the passenger compartment of motor vehicles or the like and the air contained in interiors and permits abatement of particles of dust, heavy metals, smoke, pollen and mites while a flow of air passes through an aqueous solution both in a basin and atomized, which functions as a natural and totally ecological filter and guarantees efficient abatement of all impurities.

The system basically exploits a purification basin or tank (2) made of shockproof material and hermetically sealed and containing a certain amount of water or other basically aqueous liquid (3) that creates an upper hollow space of purified air.

Pump (8) is installed at the inlet duct (4) with suitable power for generating a flow of air that is delivered into the liquid by using an atomizer (9) placed in the lower internal part of tank (2).

The system also calls for purifying the air in interiors by using a principle whereby the air is passed through a certain amount of atomized aqueous liquid to abate practically all the impurities, simulating the action of rain that washes the air and purifies it.

## Description

This industrial invention patent proposes a system for purifying the ventilated air that is introduced inside the passenger compartment of a motor vehicle or other similar means of transport such as, for example, work vehicles or earth-moving vehicles or vehicles working in dusty environments.

More in general the invention proposes a system for purifying air containing dust, residual gases or exhaust fumes or the like by atomization filtration meaning using water as the filter element through a purification treatment using an atomized aqueous liquid.

This is a newly conceived system that permits abatement of impurities in the air present in the vehicle's passenger compartment or, more in general, processing of the air in environments that contain, above all, dust, residual gases or exhaust fumes or the like, using simple and elementary dust abatement devices that do not cause passage through classic dust filters or active carbon filters but rather through a special treatment basin or, in any case, through a certain amount of atomized aqueous liquid that abates almost all the impurities, simulating the action of rain that washes and purifies air.

More specifically the system is based on air treatment using water or other specific liquid substances. The general principle is that of making the flow of air introduced into the passenger compartment pass through a special liquid tank or through an atomized aqueous liquid that constitutes a purification component that is much more efficient than traditional systems.

The anti-pollution device that is obtained purifies, in an efficient, rapid and low-cost manner, the air that is conveyed into the vehicle or, more in general, the air present in various living environments.

It permits, by this air "wash" system, depositing by dust particles and particles of heavy metals, smoke, pollen and mites into an aqueous liquid which functions as a natural and totally ecological filter and ensures substantial abatement of the agents described above.

As is known experts in the sector focus their attention on passenger compartment air purification systems in the automobile sector; they strive to find increasingly sophisticated solutions, basically used in motor vehicles as methods of protection against allergies, passive smoke, dusts and various air pollutants.

The main functions of an air purifier, meaning those designed to achieve a satisfactory level of living comfort in the vehicle, are as follows:
a) efficient removal of solid particles (over a substantial range of diameters);
b) ability to retain semi-volatile substances after collecting them in the filter;
c) low secondary emissions (noise, ozone, agglomerates);
d) performance as constant as possible over long periods;
e) ability to limit volatile organic substances even at low concentration levels;
f) low energy consumption rates.

As can be seen these are parameters that are not easy to evaluate and consequently an air purification system may be held to be sufficient when it eliminates the most evident phenomena.

As far as automobile air purifiers are concerned, there are various types of appliances that are positioned in the proximity of the fan and each model can be equipped with or be without filters containing active carbon. The most modern motor vehicles are equipped with alarm devices that warn the user when it is time to wash or replace the filter.

These are, as can be noted, advanced systems which, however, may be on the one hand quite expensive and on the other are often in any case insufficient for the results that are to be obtained in terms of abatement of the dusts, smoke and all the various more or less noxious agents that are encountered by moving vehicles.

Besides there are many sectors, both domestic and public or industrial, where there is the need to process air to sanify, purify, deodorize or, in general, abate particles or residue that are suspended in the air.

As far as atmospheric air is concerned, for example, it is known that air consists of a composition of gases including 21% oxygen, 78% nitrogen and 1% argon and 0.03% carbon dioxide as well as traces of many other gases.

Air also contains particles coming from a wide variety of sources: products coming from oxidation of sulfur, dusts coming from industrial activities and from wear by tires and by asphalt caused by traffic, particles of asbestos coming from automobile brakes and construction materials, mercury vapors freed by industrial process and a certain variety of organic compounds freed by chemical processes and by combustion.

There are also dusts that are created by crushing solid substances either by thermal expansion or by mechanical forces. Their nature may be mineral (rocks, metals, sand), vegetal (spores, seeds, pollens, wood and cotton fibers), and animal (wool, skins, etc.).

These particles, to be considered dusts, must have a diameter that does not exceed 100 microns.

Partial abatement of these dust particles or various other substances indicated above calls for devices or appliances with efficiency that is rather insufficient at least from the point of view of "air cleanliness".

Take, for example, vacuum cleaners or various appliances for treating, purifying or conditioning the air, just to remain in the household or industrial sectors.

In all these sectors air processing is determined, according to known technology, by filters of various types which, however, are never able to solve the problem at the root because they are based on the principle of retaining particles by having the flow pass through a membrane, paths or devices that are often not suited for retaining all the various grain sizes, with very low efficiencies or efficiencies, in any case, that are not sufficient for requirements.

In addition the life cycle of known filters is heavily conditioned by the serious problem of saturation and clogging of the filter itself, forcing the user or maintenance personnel to perform frequent replacements.

The object of this invention, on the other hand, is to create an air filtration system that on the one hand purifies the air inside the passenger compartment of the vehicles and, on the other, also purifies air inside interior spaces.

The new technology according to the invention is based both on passage of air directly through water and on passage of air through atomized water, offering the following main advantages:
A. less resistance to air during aspiration or emission;
B. increasing the surface of the filter by expanding it;
C. increasing the efficiency by obtaining high purification levels;
D. significantly abating unpleasant odors and fumes;
E. increasing and optimizing the efficiency of systems currently being marketed;
F. creating versatility in use (in fact this new system can be adapted to any sector);
G. solving the problem of odors;
H. being practically maintenance-free.

The immediate advantage achieved by the solution in question is that of having conceived and carried out an air purification system that has optimized abatement of noxious particles, dust and various impurities, maintaining, at the same time, very low costs for producing and carrying out the system.

Another advantage of the invention regards the fact that the air purification system according to the invention can be applied on new vehicles but can also be adapted to existing vehicles using suitable modifications that are not very demanding from the costs standpoint.

Another advantageous aspect offered by the invention is that it improves the air purification system even from the point of view of the durability and the efficiency of the substance that permits abatement of the impurities in the air being processed, which can be easily changed practically without engagements and without costs for the user except for those regarding the addition of any suitable additives.

The invention is particularly useful in the case when the air inside the passenger compartment must be processed by a recycling system since all the substances, fume particles and suspended dusts are all abated by the new filtration system in question.

Another advantage is represented by the possibility of convenient use of the filter, according to the invention, on earthmoving vehicles or on vehicles that create dust or debris, whereby their driver's cabins will constantly be supplied with purified air.

When the system calls for air treatment in home/industrial environments then the air undergoes purification treatment inside a basin using an aqueous liquid which, in this case, is atomized to retain all the impurities, simulating the action of rain but with an even stronger air washing and purification action.

The system according to the invention is consequently suitable, more in general, for use in purification of air and/or gas or exhaust fumes by atomized filtration and can be applied in many sectors of use, such as home or industrial environments as odor-capture device fundamently designed for home and public environments, as a centralized vacuum cleaner, for all types of environments with direct discharge of dirty water into the sewers, as a portable domestic or industrial vacuum cleaner, as a smoke-abatement appliance for community structures, public and/or home environments that need to reduce pollution caused by smokers or as air purifiers in general, designed for subjects afflicted with asthma and/or allergies.

To summarize the advantages proposed by the invention concern the following aspects:
□ compactness: the units can be enclosed in very small casings;
□ economy: the system that has been conceived employs components with low technological costs;
□ recyclable: the system is designed made from totally recyclable materials;
□ health: it permits substantial abatement of pollutant dusts and agents (law 626);
□ ecology: the principle has a perfectly ecological and conceptually simple character based on use of an aqueous liquid as the filter element;
□ adaptability: the system can be easily adapted to different application sectors;
□ simplicity: the system does not require maintenance; replacement of the aqueous solution can be done directly by the customer at almost no costs or can be totally automatic using a connection to water mains (when present) such as in residences;
□ efficiency: total security in terms of efficiency;
□ durability: the system has an unlimited life span.

The above-indicated goals and advantages are all achieved, according to the invention, by a system for purifying the ventilation air in the motor vehicle passenger compartment or the like and, more in general, of the air in environments containing dusts, residual gases, exhaust fumes or the like, characterized by the fact that it calls for use of a basin or container made of shockproof material that contains a certain amount of liquid substance, preferably an aqueous solution, and by the fact that this container is installed along a channel conveying a flow of air that is introduced into the passenger compartment coming from a specific pump in order to be atomized in the same solution, transferring to this almost all the impurities that it contains.

The system according to the invention also calls for, more in general, purification of air and/or gases or exhaust fumes using means suitable for treating the air by atomized water filtration, viz. using water as the filter element and a purification treatment using an atomized aqueous liquid.

The innovation can be better understood from the following description, given as a non-exclusive example and in reference to the attached drawings where:
- fig. 1: schematically illustrates a side view of a first structural example of the air purification system according to the invention;
- fig. 2: gives a schematic view of the air purification system represented in plan;
- fig. 3: gives an overall schematic view of the system according to the invention as a whole;
- fig. 4: schematically represents, in plan, a purification device according to a first possible variant;
- fig. 5: gives a schematic view of the device in the previous figure, representing a side view;
- fig. 6: gives a schematic cross-section of another example of atomization filter according to the invention as a whole;
- fig. 7: illustrates a structural variant regarding application for vacuum cleaning devices or the like;
- fig. 8: is an example of an application of the atomization filter according to the invention applied to toilet water flush tank appliances.

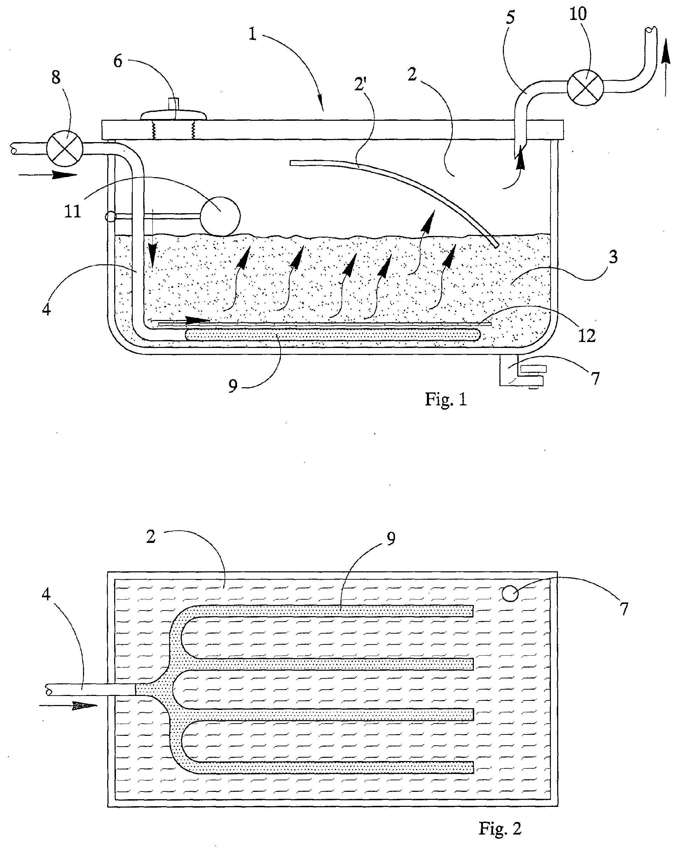

With reference to the attached figures No. 1 shows the first example of a device, or "water filter" according to the invention as a whole, designed to purify the ventilation air in passenger compartments of vehicles or other similar means of transport and mechanical work.

It consists of, as stated, a device that perfectly solves the problem of abating the polluting substances in the ventilated air introduced into the vehicle's passenger compartment, and is basically composed of a purification basin or tank 2, made of shockproof material, hermetically sealed and containing a certain amount of water or other basically aqueous liquid 3 which creates an upper hollow space of purified air as shall be better understood in the following explanation.

Purifying tank 2 includes inlet duct 4, outlet duct 5 as well as refill plug 6 placed in the upper zone and drain tap 7 placed in the lower zone. This same tank 2 has flow baffle 2' that creates a hollow space for correct outflow by the air.

Pump 8 is installed at inlet delivery duct 4. This pump is sufficiently powerful to generate a flow of air that is delivered into the liquid by using atomizer 9 located in the lower inside part of tank 2.

This atomizer consists of a hollow tubular device with multiple and suitably perforated ends from which the air, pushed by pump 8 exits and spreads into liquid 3.

When the air is atomized in the aqueous substance it transfers all of the impurities: particles of smoke, smog, pollen, dust or any other harmful materials it may contain, to the liquid itself.

In fact the minute particles of air, as they rise upwards and lap against the water, release into the water all these harmful substances and volatile and impure particles, which remain captured by the same liquid 3 that they pass through.

This creates, in the upper part of the tank, an outflow zone for perfectly purified air which can be drawn, so to be introduced into the vehicle's passenger compartment through duct 5, powered by the standard fan 10 that the vehicle is normally equipped with.

The tank also calls for use of float 11 and a probe or other similar device that permits the level of the process liquid to be monitored on the display.

Another advantage comes from the fact that grated hollow space or small mat 12 is placed above atomizer 9. This unit slows down outflow of air bubbles from the liquid, increasing impurity transfer methods and times.

An electric heating coil can be installed inside the basin. This will permit the liquid to be heated. This increase in temperature has an antifreeze function and is especially helpful during the cold seasons.

It also calls for use of an air filter, installed upstream from pump 8, which removes the biggest particles of suspended impurities.
Other odorizing additives can also be poured into the process liquid to keep the air in the passenger compartment perfumed, or chelating agents to increase effectiveness against heavy metals and anti-freezes to avoid freezing by the liquid during cold seasons.

Note that all the user has to do is to change the water at routine intervals by opening tap 7 on the lower part of the unit, connected with a tube to drain the water and replace it.

The system that is described, as already mentioned in precedence, can be installed on new vehicles but also on existing vehicles by just making a few suitable modifications and adaptations to the existing air ventilation circuit.

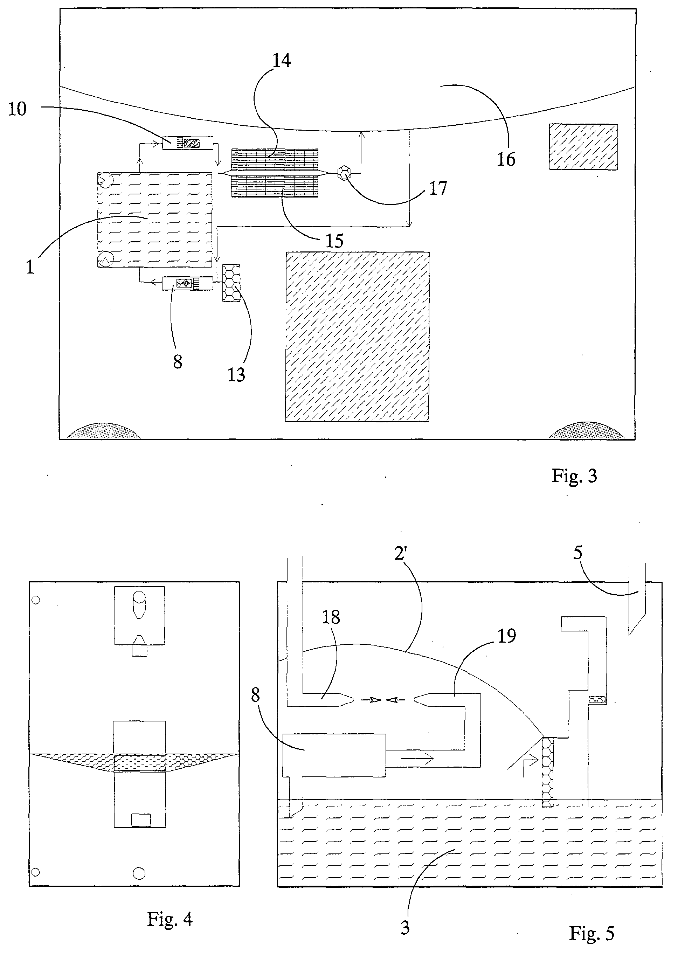

As the attached layout in figure 3 illustrates the filtration circuit for vehicle's passenger compartment air starts with normal filter 13 installed on the intake tube.

Aspiration of exterior air or air inside the passenger compartment, when recycling the air, is powered by motor pump 8 that compresses the air in water filter 1 from which it is expelled perfectly purified, pulled by ventilation fan 10 to cooling system 14 (summer) or heating system 15 (winter) for the necessary conditioning.

It is subsequently introduced into passenger compartment 16, passing through an optional active carbon filter indicated by number 17.

Figures 4 and 5 represent a possible variant to the system described, which can be created using two opposed sprayers 18 and 19, one of which introduces air (18) and the other of which atomizes water (19).

The collision between air and water cleans the air which is channeled through suitable condensation and drip chambers, also equipped with mesh filters or the like, towards outlet duct 5 that introduces clean air into the vehicle's passenger compartment.

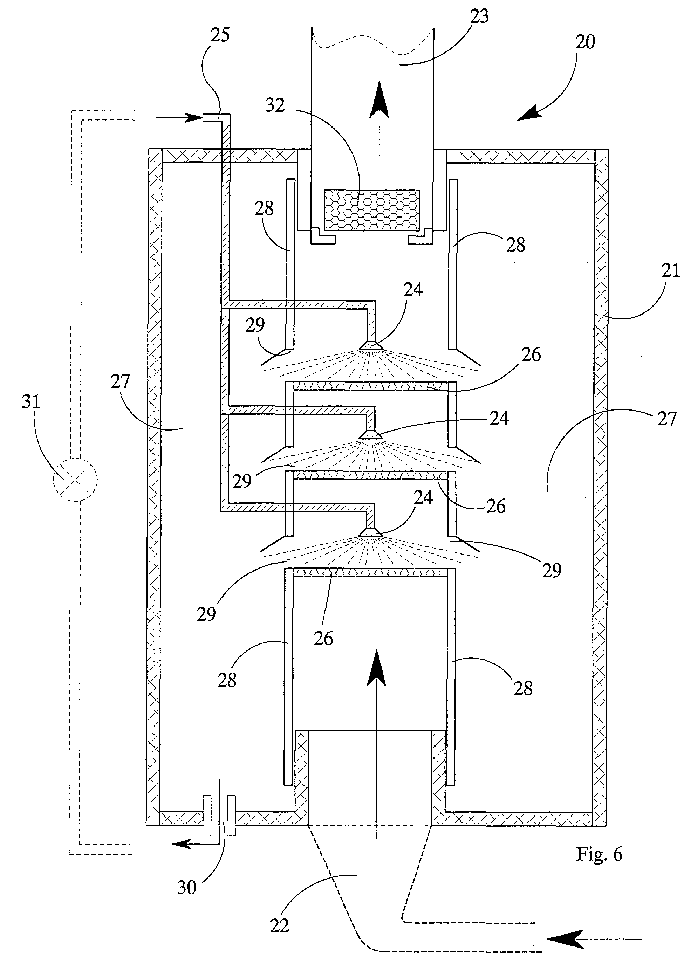

Figures 6, 7 and 8 represent solutions used to condition the air in rooms.

Number 20 in figure 6 indicates an atomization filter according to this invention as a whole, illustrating it according to a first structural shape.

Atomization filter 20 is basically composed of casing 21, which can have a cylindrical, prismatic or any other suitable shape, equipped with inlet duct 22 and outlet duct 23 carrying a flow of air to be purified.

As is better understood in the following pages, air flow can be meant to indicate any gaseous form to be purified, either from the point of view of conditioning air inside rooms or from that of abating noxious residue when purifying exhaust fumes or gases.

Casing 21 has, inside, a series of atomizing nozzles 24 supplied by a flow of water introduced through inlet duct 25.

Atomizing nozzles 24 are shaped so that they generate jets of water in a basically radial or conical direction with respect to the axis of the flow of air, so as to cause a direct collision between the air particles and the water particles, with consequent transfer of the impurities contained in the air to the water.

As figure 6 shows, each of the water jets 24 is placed next to an equal number of filters 26 designed to generate "water veils" across the passage of the flow of air to improve particle abatement.

The structural example illustrated in figure 6 has casing 21 that includes, insides, a second chamber 27 defined by the presence of tubular hollow space 28.

Water coming from the atomization zones flows into this external chamber 27, passing through specific openings 29 made in the hollow space itself. The process water, containing the dust particles and any other residues from the processed air consequently deposits in chamber 27 and goes on to flow out through drain path 30.

The water introduced into the atomizers can be either tap water or backwater coming from drain 30 which if necessary is filtered and then put back into circulation by pump 31.

The air exiting from duct 23 is then made to pass through filter 32 which may be the baffle or the decondensing chamber type, suitable for abating all the residual water particles.

The filter that is described can be used in many application sectors and can be designed with the two chambers that form hollow space 28 combined into a single chamber as long as the flow of air passes through the jets of atomized water.

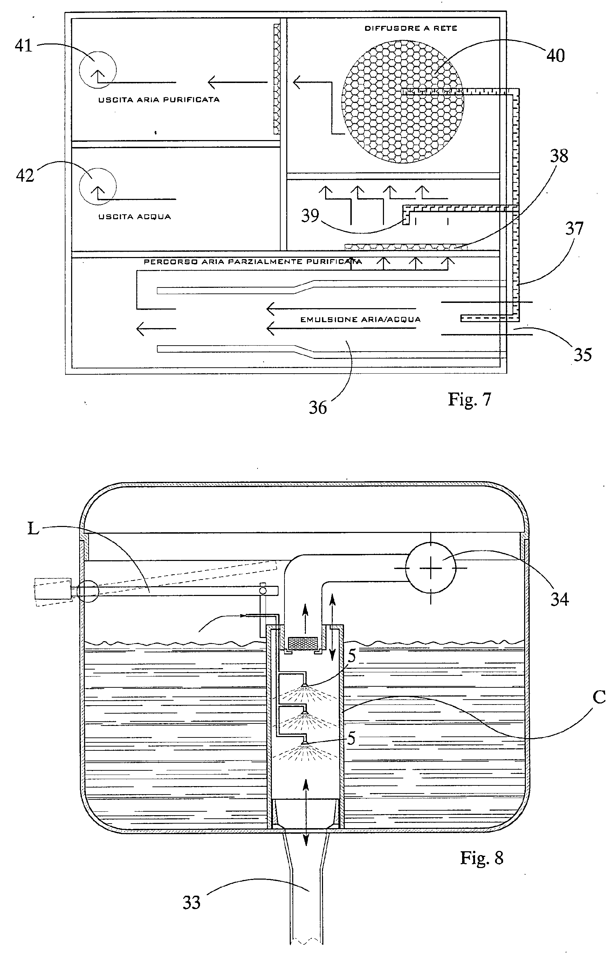

Figure 8 illustrates a structural example applied to the flush tank of a bathroom fixture such as a toilet or the like, permitting absorption and abatement of the bad odors that can be generated during use.

In this case the air, when the toilet is being used, is aspirated through the same water delivery duct 33, coming from the water drain holes present in the sanitary fixture bowl using an aspirator or fan 34 installed, for example, in the upper inner part of the flush tank. Fan 34 is powered by rechargeable batteries and/or by the power grid and/or can collaborate with an active carbon filter.

Air that is aspirated upwards encounters the water atomization zone composed of jets 24 positioned as in the solution described previously but in this case placed on the mobile duct or control pipe C moved by lever L.

Atomization of the water using jets 24 can also be obtained using a special pump that picks the water up from the flush tank itself.

In this case duct 33 finds itself containing an upwards flow of aspiration air and a downflow of drain water that contains the abated particles which subsequently flow into the toilet facility drain pipe.

An advantageous solution calls for activation of fan 34 and delivery of water through atomizing jets 24 to be controlled by, for example, a sensor or a photocell that cause the fan to start and a solenoid valve that delivers the flow of water only when a user is present, meaning when the toilet facilities are being used.

This solution achieves the result of eliminating odors and impurities from the air without having to carry them outside the room, using, for example, exhaust ducts in the wall, but keeping them inside the mechanism that is being used (for example inside the toilet). This offers the substantial advantage of permitting installation even on existing plumbing systems without having to perform masonry work.

Figure 7, finally, illustrates an application of the water filter when it is used with a household or industrial vacuum cleaner -- a version where the system can be turned upside down or used when it is oriented in any direction.

According to this solution the air to be processed is introduced through inlet 35 into same duct 36 where water coming from duct 37 is also delivered and atomized, forming an air - water emulsion.

The air - water mix passes through a series of consecutive paths and a first filter or mesh diffuser 38, on which the water is atomized through jet 39, and from this towards second mesh diffuser 40 where the flow is separated to flow towards purified air outlet 41 and process water outlet 42.

Another possible application to emphasize is the creation of a centralized vacuum cleaner/liquid aspirator to install in a bathroom with or without a direct connection to the plumbing system (with or without a water pump).

This type of vacuum cleaner would permit the residence to be cleaned directly using exclusively a single mobile or wall-embedded tube and using totally independent equipment for draining off the dirty water, conveyed to the sink or washing machine drain.

This solution, in addition to being efficient, cheaper and simple, also keeps the vacuum cleaner in perfect efficiency and avoids, in this case, all the problems caused by connection to the electric system and with emptying and cleaning the vacuum cleaner.

Many other solutions are provided for by using the water atomization filter according to the invention.

If the filter is the type with collection of the liquid then replacement of the aqueous solution with process residue can be done directly by the user whenever he feels it to be necessary.

To do this it is simply enough to open a tap installed low down to drain all the liquid and then introduce a small amount of rinse liquid and, after closing the drain tap, the filter will be refilled.

If desired users can also add, in all these cases, a few drops of perfume to perfume the home/industrial interior in a totally natural manner.

Advantageously, there is the possibility of inserting a silver bar and/or any water-purifying additive or substance in the treating water.

In order to demonstrate the efficiency of the filter it has been subjected to rigorous operating tests, with the following technical tests performed by introducing exhaust gas from an operating vehicle directly into the filter to measure its capacity to abate noxious gases.

The test was performed on the machine MOTOR X - EXHAUST GAS TESTER AND ANALYSER M.750 Ref. Vers. 4/93 EEC MIN. APP. 1825 217/RM/94 (appliance for testing motor vehicle exhaust gas).

### STANDARDS CUNA NC 005/05.

Tests performed at the TORTELLA ANGELO Repair Shop, Via Leopardi, 32, SANDRA' di CASTELNUOVO D/G (VR).
Vehicle used: FIAT UNO 45, NOT CATALYZED, YEAR 1998.
Test Date: September 28, 2000.
Notes: Tests were performed by taking gases at the outlet from the filter after 16 seconds of introduction of exhaust gas from the vehicle.

The following results were achieved, where the Tower Scrubber device corresponds to that illustrated in figure 1 and the Air Washing device is the type illustrated in figure 2:

| 1. TOWER SCRUBBER - AIR WASHING | | | | |
|---|---|---|---|---|
| **Fiat uno 45** | **CO%** | **CO2%** | **HC ppm** | **O2 %** |
| **Without filter** | **2.34** | **14.6** | **251** | **2.07** |
| **With filter** | **0.31** | **1.7** | **65** | **2.31** |
| | | | | |
| **Difference** | **2.03** | **12.9** | **186** | **-0.24** |
| | | | | |
| **% *of abatement*** | ***86.75*** | ***88.36*** | ***74.10*** | ***-11.59*** |

| 2. AIR WASHING | | | | |
|---|---|---|---|---|
| **Fiat uno 45** | **CO%** | **CO2%** | **HC ppm** | **O2 %** |
| **Without filter** | **2.34** | **14.6** | **251** | **2.07** |
| **With filter** | **0.82** | **4.9** | **104** | **2.15** |
| | | | | |
| **Difference** | **1.52** | **9.7** | **147** | **-0.08** |
| | | | | |
| ***% of abatement*** | ***64.96*** | ***66.44*** | ***58.57*** | ***-3.86*** |

| 3. TOWER SCRUBBER | | | | |
|---|---|---|---|---|
| **Fiat uno 45** | **CO%** | **CO2%** | **HC ppm** | **O2 %** |
| **Without filter** | **2.34** | **14.6** | **251** | **2.07** |
| **With filter** | **0.77** | **4.4** | **90** | **2.23** |
| | | | | |
| **Difference** | **1.57** | **10.2** | **161** | **-0.16** |
| | | | | |
| ***% of abatement*** | ***67.09*** | ***69.86*** | ***64.14*** | ***-7.73*** |

| 4. AIR WASHING + TOWER SCRUBBER (measurement performed with the filter exhausted) | | | | |
|---|---|---|---|---|
| **Fiat uno 45** | **CO%** | **CO2%** | **HC ppm** | **O2 %** |
| **Without** | **2.34** | **14.6** | **251** | **2.07** |
| **With filter** | **0.73** | **4.4** | **90** | **2.13** |
| | | | | |
| **Difference** | **1.61** | **10.2** | **161** | **-0.06** |
| | | | | |
| ***% of abatement*** | ***68.80*** | ***69.86*** | ***64.14*** | ***-2.90*** |

The results that were achieved are much more satisfying than those from any other type of abatement device for the dust or harmful particles contained in vehicle exhaust gases.

An expert in this sector can also provide for other possible modifications and variants to the filter system as described and illustrated, obtaining solutions that are to be held to be included in the sector of protection of the invention as defined by the following claims.

## Claims

1. System for purifying the ventilation air in the passenger compartment of motor vehicles or the like and the air containing dust, residual gases or exhaust fumes or the like, characterized by the fact that it calls for use of means for atomizing the air to be purified inside containers of water and/or aqueous solutions and/or means using atomized water as the filter element, through a purification treatment using an atomized aqueous solution so that the air, passing through the water both in the basin and atomized, transfers all the impurities it contained to this.

2. System for purifying the ventilation air in the passenger compartment of motor vehicles or the like characterized by the fact that it calls for use of a basin, tank or sealed container (2) where a certain amount of liquid substance (3) or aqueous solution is introduced and by the fact that this container is positioned along the duct carrying the flow of air to be introduced into the passenger compartment, coming from a special pump, and is diffused in this same liquid substance by a special atomizer (9), transferring all the impurities it contained to this.

3. Air purification system according to claim 2 characterized by the fact that said purification tank or basin (2) is hermetically sealed and contains a certain amount of water or other basically aqueous liquid (3) that creates an upper hollow space of purified air.

4. Air purification system according to claim 3 characterized by the fact that said purifying tank (2) includes inlet duct (4), outlet duct (5) as well as refill plug (6) placed in the upper part and drain tap (7) placed in the lower zone.

5. Air purification system according to the claims from 2 to 4 characterized by the fact that pump (8) is placed at the inlet delivery duct (4) and has sufficient power for generating a flow of air that is delivered into the liquid by using atomizer (9) located in the lower inside part of tank (2).

6. Air purification system according to claims from 2 to 5 characterized by the fact that said atomizer consists of a hollow tubular device with multiple and suitably perforated ends from which the air, pushed by pump (8), exits and spreads into liquid (3).

7. Air purification system according to the claims from 2 to 6 characterized by the fact that use also calls for, in tank (2), a float or probe (11) or other similar device that permits the level of process liquid to be monitored on the display.

8. Air purification system according to the claims from 2 to 7 characterized by the fact that abatement of the impurities in the air can be achieved by two opposed sprayers (18, 19), one of which introduces air (18) and the other of which atomizes water (19).

9. Air purification system according to the claims from 2 to 8 characterized by the fact that in the case where two opposed sprayers are used the collision between air and water cleans the air which is channeled through suitable condensation and drip chambers, also equipped with mesh filters or the like, towards outlet duct (5) that introduces clean air into the vehicle's passenger compartment.

10. Air and/or exhaust gas and fume purification system according to claim 1 characterized by the fact that it calls for use of means suitable for processing the air by water atomization filtration, viz. water is used as the filter element through a purification process that uses an atomized aqueous liquid.

11. Air purification system according to claim 10 characterized by the fact that it calls for an atomization filter (20) composed of casing (21) which can have a cylindrical, prismatic or any other suitable shape, equipped with inlet duct (22) and outlet duct (23) carrying a flow of air to be purified.

12. Air purification system according to claims 10 and 11 characterized by the fact that said casing (21) is equipped inside with a set of atomizing nozzles (24) supplied by a flow of water introduced through inlet duct (25).

13. Air purification system according to claims from 10 to 12 characterized by the fact that said atomization nozzles (24) are shaped so that they generate jets of water in a basically radial or conical direction with respect to the axis of flow of air so as to cause a direct collision between the air particles and the water particles with consequent transfer of the impurities contained in the air to the water.

14. Air purification system according to the claims from 10 to 13 characterized by the fact that each of the water jets (24) is placed next to an equal number of filters (26) designed to generate "water veils" across the passage of the flow of air to improve particle abatement.

15. Air purification system according to claim 12 characterized by the fact that said casing (21) includes, inside, a second chamber (27) defined by the presence of tubular hollow space (28).

16. Air purification system according to claims from 10 to 15 characterized by the fact that water coming from the atomization zones flows into this external chamber (27) passing through special openings (29) made in the hollow space itself. The process water containing the dust particles and any other residues from the processed air consequently deposits in said chamber (27) and goes on to flow out through drain path (30).

17. Air purification system according to claims from 10 to 16 characterized by the fact that the water introduced into the atomizers can be either tap water or backwater coming from drain (30) which if necessary is filtered and then put back into circulation by pump (31).

18. Air purification system according to the claims from 10 to 17 characterized by the fact that the air exiting from duct (23) is then made to pass through baffle or decondensing chamber filter (32) designed to abate all the particles of residual water.

19. Air purification system according to claims from 10 to 18 characterized by the fact that the filter that is described can be used in many application sectors and can be designed with the two chambers that form hollow space (28) combined into a single chamber as long as the flow of air passes through the jets of atomized water.

20. Air purification system according to the claims from 10 to 19 characterized by the fact that the water, after it is atomized, can flow out both from independent ducts and from the air aspiration ducts themselves.

21. Air purification system according to the claims from 10 to 20 characterized by the fact that it can be installed in toilet flush tanks or the like and that in this case the air is aspirated through the same water delivery duct (33), coming from the water drain holes present in the sanitary fixture bowl, using an aspirator or fan (34) installed, for example, in the upper inner part of the flush tank. Said fan (34) is powered by rechargeable batteries and/or by the power grid and/or can collaborate with an active carbon filter.

22. Air purification system according to the claims from 10 to 21 characterized by the fact that it can be installed in vacuum cleaners or the like, viz. in a version where the system can be turned upside-down or used in any direction.

23. Air purification system according to the claims from 10 to 22 characterized by the fact that in the vacuum cleaner version the air to be processed is introduced through inlet (35) into same duct (36) where water coming from duct (37) is also delivered and atomized, forming an air-water emulsion.

24. Air purification system according to the claims from 10 to 23 characterized by the fact that in the vacuum cleaner version the air-water mix, passing through a series of consecutive paths, first passes through a mesh diffuser (38) on which water is atomized through jet (39) and from this towards a second mesh diffuser (40) where the flow is separated to flow out from a purified air outlet (41) and from a process water outlet (42).

25. Air purification system according to the claims from 10 to 24 characterized by the fact that one of the possible applications is its installation for purification of air polluted by vehicle exhaust gas, for example by applying the device inside residences, vehicles, aspiration hoods, or in any other similar position.
